# EUROPÄISCHE PATENTANMELDUNG

(11) **EP 1 361 121 A1**
(43) Veröffentlichungstag der Anmeldung: **12.11.2003**
(21) Anmeldenummer: 02010469.1
(22) Anmeldetag: 08.05.2002
(51) Int. Cl.: B60R 21/34, E05B 65/19, E05D 11/00

(54) **Fussgängerschutzeinrichtung**

(71) Anmelder: Deutscher, Erwin, 8181 St. Ruprecht/Raab (AT)
(72) Erfinder: Deutscher, Erwin, 8181 St. Ruprecht/Raab (AT)
(74) Vertreter: Manitz, Finsterwald & Partner GbR

(57) **Zusammenfassung**

Die Erfindung betrifft eine Fußgängerschutzeinrichtung für Kraftfahrzeuge mit zumindest einem eine Außenfläche des Fahrzeugs bildende Bauteil (13), insbesondere einer Motorhaube, das im Normalbetrieb des Fahrzeugs eine Ausgangsstellung einnimmt und mittels wenigstens einer Betätigungseinrichtung (41) ausgehend von der Ausgangsstellung in eine vom Fahrzeug abgehobene Schutzstellung überführbar ist, wobei die Betätigungseinrichtung (49) zumindest ein das Bauteil (13) in die Schutzstellung vorspannendes Federorgan (15) und ein im Normalbetrieb das Bauteil gegen die Vorspannkraft des Federorgans (15) in der Ausgangsstellung haltendes Halteorgan (17) umfasst, das zur Freigabe des vorgespannten Bauteils (13) von einem Freigabezustand umschaltbar ist.

## Beschreibung

Die Erfindung betrifft eine Fußgängerschutzeinrichtung für Kraftfahrzeuge mit zumindest einem eine Außenfläche des Fahrzeugs bildenden Bauteil, das im Normalbetrieb des Fahrzeugs eine Ausgangsstellung einnimmt und ausgehend von der Ausgangsstellung in eine vom Fahrzeug abgehobene Schutzstellung überführbar ist. Die Erfindung betrifft ferner ein Kraftfahrzeug mit wenigstens einer derartigen Fußgängerschutzeinrichtung.

Dem Fußgängerschutz kommt weltweit immer größere Bedeutung zu. Daher ist man bestrebt, nicht nur die Fahrzeuginsassen zu schützen, sondern den Schutz von Fußgängern durch zusätzliche Sicherheitseinrichtungen an den Fahrzeugen zu verbessern.

So sind beispielsweise Einrichtungen zum Anheben der Motorhaube von Fahrzeugen grundsätzlich bekannt. Dabei wird beim Nachweis einer erfolgten oder unmittelbar bevorstehenden Kollision des Fahrzeugs mit einem Objekt, bei dem es sich um einen Fußgänger handeln könnte, die Motorhaube schlagartig angehoben und damit von harten, massiven Baugruppen des Fahrzeugs, wie beispielsweise dem Motorblock, weg bewegt. Hierdurch wird gewissermaßen eine "Puffer- oder Knautschzone" geschaffen, welche die Gefahr von Verletzungen, insbesondere von Kopfverletzungen, reduziert.

Problematisch ist, dass die zum Anheben der Motorhaube zusätzlich erforderlichen Einrichtungen im ohnehin häufig vollständig ausgefüllten Motorraum zusätzlichen Platz benötigen sowie in der Herstellung teuer und aufwändig sind.

Aufgabe der Erfindung ist es, eine Fußgängerschutzeinrichtung der eingangs genannten Art zu schaffen, die bei möglichst einfachem Aufbau und geringem Platzbedarf in zuverlässiger Weise zu einer Verbesserung der Fußgängersicherheit beiträgt.

Die Lösung dieser Aufgabe erfolgt durch die Merkmale des Anspruchs 1 und insbesondere dadurch, dass eine Betätigungseinrichtung vorgesehen ist, mittels welcher das Bauteil ausgehend von der Ausgangsstellung in eine vom Fahrzeug abgehobene Schutzstellung überführbar ist, wobei die Betätigungseinrichtung zumindest ein das Bauteil in die Schutzstellung vorspannendes Federorgan und ein im Normalbetrieb das Bauteil gegen die Vorspannkraft des Federorgans in der Ausgangsstellung haltendes Halteorgan umfasst, das zur Freigabe des vorgespannten Bauteils von einem Haltezustand in einen Freigabezustand umschaltbar ist.

Erfindungsgemäß wird die zum Überführen des Bauteils in die Schutzstellung, z.B. zum Anheben einer Motorhaube, erforderliche Energie von wenigstens einem Federorgan aufgebracht, das während des Normalbetriebs des Fahrzeugs, wenn sich das Bauteil in seiner normalen Ausgangsstellung befindet, die Betätigungsenergie speichert und das Bauteil in Richtung der Schutzstellung vorspannt. Hierdurch lässt sich das Bauteil schlagartig in die vom Fahrzeug abgehobene Schutzstellung überführen, indem das Halteorgan, das sich im normalen Betrieb des Fahrzeugs in einem Haltezustand befindet und dabei das Bauteil in der normalen Ausgangsstellung hält, in einen Freigabezustand überführt wird, um das vorgespannte Bauteil freizugeben, das daraufhin durch die Federkraft des vorgespannten Federorgans in die Schutzstellung überführt wird.

Die Freigabe des vorgespannten Bauteils kann beispielsweise dadurch erfolgen, dass das Halteorgan mit einem elektrischen Freigabesignal beaufschlagt wird, wenn ein am Fahrzeug angebrachter Sensor oder Detektor eine bereits erfolgte oder unmittelbar bevorstehende Kollision mit einem Objekt nachweist, bei dem es sich um einen Fußgänger handeln könnte.

Bei dem Bauteil handelt es sich bevorzugt um die Motorhaube des Fahrzeugs, wobei die Erfindung grundsätzlich auch in Verbindung mit anderen äußeren Fahrzeugbauteilen einsetzbar ist.

Das erfindungsgemäße Prinzip zum Überführen des Bauteils in die Schutzstellung kann in vorteilhafter Weise mit einer Betätigungseinrichtung realisiert werden, die einen sehr einfachen Aufbau aufweist, kostengünstig hergestellt werden kann und dennoch für einen besonders wirksamen und zuverlässig funktionierenden Fußgängerschutz sorgt. Ein weiterer wesentlicher Vorteil der Erfindung besteht darin, dass sich das erfindungsgemäße Konzept problemlos an die unterschiedlichsten Fahrzeugtypen anpassen lässt.

Ferner ist von Vorteil, dass die Betätigungseinrichtung und damit die Fußgängerschutzeinrichtung grundsätzlich wieder verwendbar ausgeführt werden kann. Bei einer Fehlauslösung oder einem das Fahrzeug bzw. das Bauteil nicht oder nur unwesentlich beschädigenden Unfall braucht z.B. eine in die Schutzstellung angehobene Motorhaube lediglich wieder in ihre Ausgangsstellung zurück gedrückt zu werden, wodurch das Federorgan erneut gespannt wird. Eine ggf. vorhandene Arretierung für das Bauteil in der Schutzstellung braucht dann lediglich gelöst zu werden, um die Bewegung des Bauteils zurück in die Ausgangsstellung zu ermöglichen.

In einer besonders bevorzugten praktischen Ausgestaltung der Erfindung ist das Federorgan in Form einer Blattfeder vorgesehen.

Mit einer derartigen Blattfeder lässt sich eine extrem flache Bauweise realisieren, die insbesondere in Verbindung mit einer anhebbaren Motorhaube von Vorteil ist. Das als Blattfeder ausgebildete Federorgan kann sich bei in der Ausgangsstellung befindlicher Motorhaube längs deren Unterseite erstrecken.

Wenn es sich bei dem vom Fahrzeug abhebbaren Bauteil um eine Motorhaube handelt, dann wirkt die die Blattfeder umfassende Betätigungseinrichtung mit der Motorhaube vorzugsweise im Bereich eines hinteren Haubenscharniers zusammen. Dabei ist es bevorzugt, wenn die Blattfeder mit einem freien Ende im Bereich des Haubenscharniers mit der Motorhaube fest verbunden ist.

Des Weiteren ist es erfindungsgemäß bevorzugt, wenn die Betätigungseinrichtung ein Arretierorgan umfasst, mit dem das Bauteil in der Schutzstellung automatisch arretierbar ist. Auf diese Weise ist die Lage des Bauteils relativ zum Fahrzeug in der Schutzstellung durch die Betätigungseinrichtung vorgegeben.

Das Arretierorgan ist vorzugsweise als Schwenkhebel ausgebildet, der z.B. in Form eines Schwenkbügels vorgesehen sein kann.

In einer weiteren bevorzugten Ausführungsform der Erfindung ist das Arretierorgan nachgiebig ausgebildet, und zwar vorzugsweise derart, dass es durch auf das in der Schutzstellung befindliche Bauteil einwirkende äußere Kräfte, die einen vorgegebenen Wert übersteigen, verformt werden kann. Beispielsweise im Fall einer anhebbaren Motorhaube kann diese aufgrund der Nachgiebigkeit des Arretierorgans nachgeben, wodurch das Verletzungsrisiko weiter reduziert werden kann.

Gemäß einem besonders bevorzugten Ausführungsbeispiel der Erfindung sind wenigstens zwei an räumlich voneinander getrennten Bereichen mit dem Bauteil zusammenwirkende Betätigungseinrichtungen vorgesehen.

Dabei kann vorgesehen sein, dass eine der Betätigungseinrichtungen bereits alleine in der Lage wäre, das Bauteil in die gewünschte Schutzstellung zu überführen, während die andere Betätigungseinrichtung lediglich unterstützend wirksam ist.

Ferner ist es bevorzugt, wenn die eine Betätigungseinrichtung dazu dient, für die andere Betätigungseinrichtung ein Freigabesignal zum Umschalten des Halteorgans bereitzustellen oder das Halteorgan der anderen Betätigungseinrichtung zu betätigen. Hierdurch braucht lediglich eine der Betätigungseinrichtungen von einer zentralen Steuereinheit des Fahrzeugs mit einem Auslösesignal beaufschlagt zu werden. Das Auslösen der zweiten Betätigungseinrichtung übernimmt dann die erste Betätigungseinrichtung auf elektrischem oder mechanischem Wege.

Wenn es sich bei dem vom Fahrzeug abhebbaren Bauteil um die Motorhaube des Fahrzeugs handelt, dann wirkt die Haupt-Betätigungseinrichtung vorzugsweise im Bereich des hinteren Haubenscharniers und die unterstützende Neben-Betätigungseinrichtung im Bereich des vorderen Haubenschlosses mit der Motorhaube zusammen.

Die Erfindung ist auch in Verbindung mit solchen Motorhauben verwendbar, bei denen sich das Haubenscharnier, also die Schwenkachse, um welche die Motorhaube beim normalen Öffnen verschwenkt wird, vorne im Bereich der Fahrzeugfront befindet.

Dabei ist es bevorzugt, wenn die Betätigungseinrichtung mit der Motorhaube einerseits und dem Haubenschloss andererseits derart verbunden ist, dass die Motorhaube mittels der Betätigungseinrichtung bei verriegeltem Haubenschloss anhebbar ist.

Weitere vorteilhafte Ausgestaltungen der Erfindung sind auch in den Unteransprüchen, der Beschreibung sowie der Zeichnung angegeben.

Die Erfindung wird im Folgenden beispielhaft unter Bezugnahme auf die Zeichnung beschrieben. Es zeigen:
- Fig. 1: teilweise eine mit einer erfindungsgemäßen Fußgängerschutzeinrichtung versehene Fahrzeugmotorhaube im Bereich des hinteren Haubenscharniers,
- Fig. 2: teilweise eine mit einer erfindungsgemäßen Fußgängerschutzeinrichtung versehene Fahrzeugmotorhaube im Bereich des vorderen Haubenschlosses,
- Fig. 3a: schematisch eine Motorhaube, die mit einer zwei Betätigungseinrichtungen umfassenden erfindungsgemäßen Fußgängerschutzeinrichtung versehen ist, in der normalen Ausgangsstellung, und
- Fig. 3b: die Motorhaube von Fig. 3a in der angehobenen Schutzstellung.

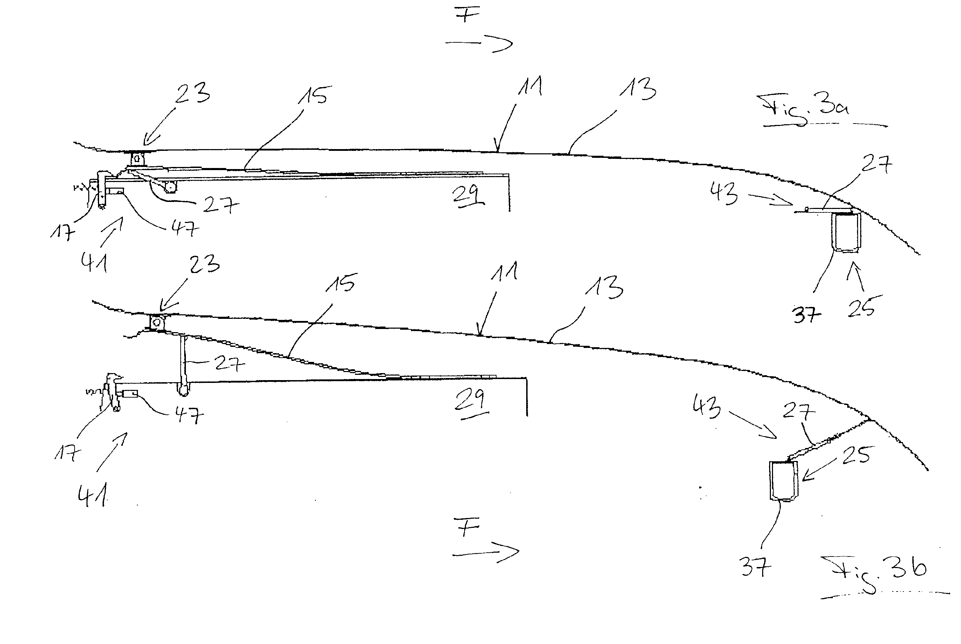

Die Figuren betreffen eine bevorzugte Ausführungsform der Erfindung, bei der es sich um eine Fußgängerschutzeinrichtung mit einer aktiven Motorhaube 13 handelt, die bei einer Kollision des Fahrzeugs mit einem Fußgänger schlagartig angehoben werden kann. Die Motorhaube 13 ist zwei räumlich voneinander getrennten Betätigungseinrichtungen 41, 43 versehen (vgl. Fig. 3a und 3b). Die hintere Betätigungseinrichtung 41 wirkt mit der Motorhaube 13 im Bereich des hinteren Haubenscharniers 23 zusammen, um welches die Motorhaube 13 beim normalen Öffnen verschwenkt wird. Die vordere Betätigungseinrichtung 43 wirkt mit der Motorhaube 13 im Bereich des vorderen Haubenschlosses 25 zusammen, das zum normalen Öffnen der Motorhaube 13 entriegelt wird.

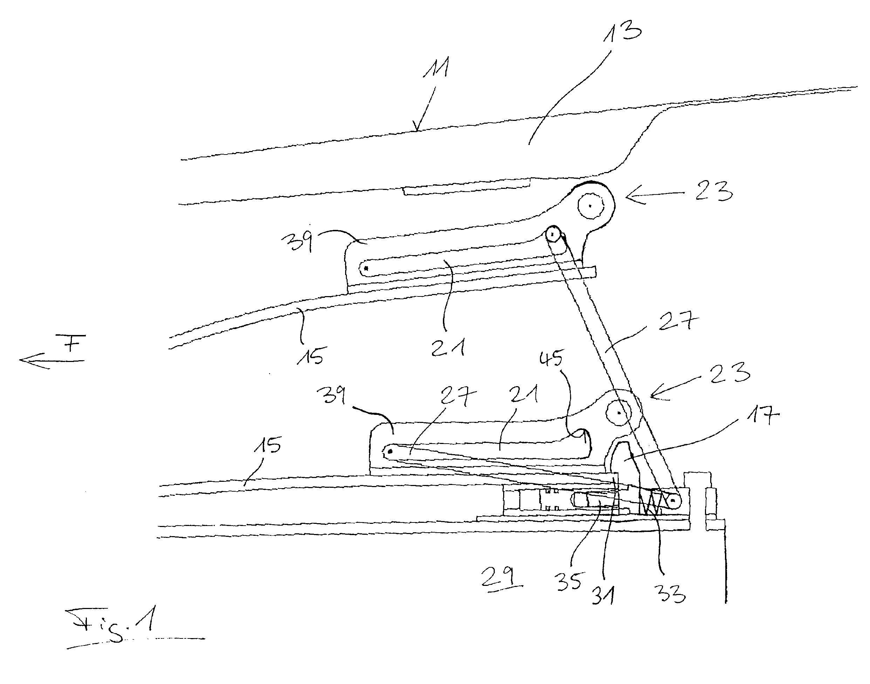

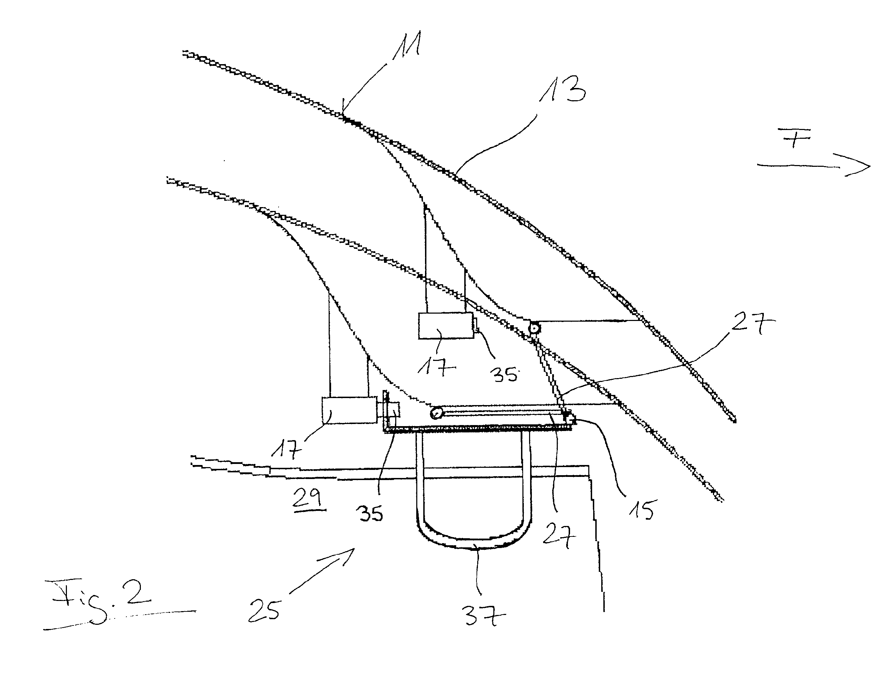

In den Fig. 3a und 3b sind die Betätigungseinrichtungen 41, 43 lediglich schematisch zu verstehen. Bevorzugte Ausführungsformen der Betätigungseinrichtungen 41, 43 werden nachstehend in Verbindung mit Fig. 1 und Fig. 2 beschrieben.

Zur Orientierung ist in den Figuren mit F die Fahrtrichtung des Fahrzeugs angedeutet.

In Fig. 1 ist die Motorhaube 13 lediglich in der angehobenen Schutzstellung dargestellt. Einige Bestandteile der erfindungsgemäßen Betätigungseinrichtung, auf die im Folgenden näher eingegangen wird, sind dagegen sowohl in der unteren Ausgangsstellung als auch in der oberen Schutzstellung gezeigt.

Die Betätigungseinrichtung umfasst als Federorgan zum Vorspannen der Motorhaube 13 in die angehobene Schutzstellung eine Blattfeder 15, die mit ihrem vorderen, in Fig. 1 nicht dargestellten Ende an der Fahrzeugkarosserie 29 befestigt ist (siehe beispielsweise Fig. 3a und 3b). Mit ihrem hinteren freien Ende 31 ist die Blattfeder 15 an einem Scharnierabschnitt 39 befestigt, der einen Bestandteil des hinteren Motorhaubenscharniers 23 bildet, mit dem die Motorhaube 13 verbunden ist.

Der Scharnierabschnitt 39 ist mit einem Führungsschlitz 21 versehen, der eine Kulissenführung für einen bügelförmigen Schwenkhebel 27 der Betätigungseinrichtung bildet. Bei in der Ausgangsstellung befindlicher Motorhaube 13 befindet sich der Schwenkhebel 27 am vorderen Ende des Führungsschlitzes 21, während er sich bei in der Schutzstellung befindlichen Motorhaube 13 in einer Arretierungsausbuchtung 45 des Führungsschlitzes 21 befindet und auf diese Weise die Motorhaube 13 in der angehobenen Schutzstellung derart arretiert, dass die Motorhaube 13 nicht von selbst und auch dann nicht zurück in die Ausgangsstellung gelangt, solange auf die Außenfläche 11 der Motorhaube 13 einwirkende äußere Kräfte einen vorgegebenen Betrag nicht übersteigen.

Der Schwenkbügel 27 ist derart ausgelegt, dass er bei einen vorgegebenen Betrag übersteigenden äußeren Kräfte, die auf die Außenfläche 11 der Motorhaube 13 einwirken, durch Verbiegen oder Einknicken nachgibt, so dass die Motorhaube 13 zurück in die Ausgangsstellung bewegt werden kann.

Alternativ oder zusätzlich kann vorgesehen sein, dass der Schwenkbügel 27 durch äußere Kräfte, die den vorgegebenen Betrag übersteigen, in seiner Lage verändert werden kann, indem z.B. die Lagerung des Schwenkbügels 27 an der Karosserie - beispielsweise an einer dafür vorgesehenen Sollbruchstelle - nachgibt und der Schwenkbügel 27 durch die äußeren Kräfte derart relativ zur Fahrzeugkarosserie bewegt wird, dass die Motorhaube 13 zurück in Richtung der Ausgangsstellung bewegt werden kann.

In der normalen Ausgangsstellung der Motorhaube 13 ist das hintere freie Ende 31 der Blattfeder 15 durch ein Halteorgan 17 verriegelt, so dass im Normalbetrieb des Fahrzeugs die Motorhaube 13 bei unter Vorspannung stehender Blattfeder 15 durch das Halteorgan 17 in der Ausgangsstellung gehalten ist, in der die Motorhaube 13 durch Verschwenken um die durch das Scharnier 23 festgelegte Schwenkachse normal geöffnet werden kann.

Das Halteorgan 17 der Betätigungseinrichtung ist an der Fahrzeugkarosserie 29 verschiebbar oder verschwenkbar gelagert und kann mittels eines Stellorgans 35 aus der in Fig. 1 dargestellten Verriegelungsstellung in eine Freigabestellung überführt werden, in der die Blattfeder 15 freigegeben ist. Dieses Umschalten des Halteorgans 17 zwischen dem Haltezustand und dem Freigabezustand kann grundsätzlich auf beliebige Art und Weise erfolgen. Das Stellorgan 35 kann beispielsweise Bestandteil einer Kolben/Zylinder-Anordnung und dabei als in einem Zylinder längsverschiebblich geführter Kolben ausgebildet sein, der durch Gasexpansion im Zylinder schlagartig in Freigaberichtung beschleunigt werden kann.

Die zum Freigeben der Blattfeder 15 erforderliche Stellbewegung des Stellorgans 35 erfolgt gegen die Rückstellkraft einer Feder 33, die das Stellorgan 35 und damit das Halteorgan 17 in die Verriegelungsstellung vorspannt.

Wenn ein am Fahrzeug angebrachter Sensor oder Detektor eine gerade erfolgte oder unmittelbar bevorstehende Kollision mit einem Objekt, bei dem es sich um einen Fußgänger handeln könnte, nachweist, wird an die Betätigungseinrichtung ein Freigabe- oder Auslösesignal übermittelt, welches z.B. durch Zünden eines Gasgenerators die vorstehend beschriebene Halteeinrichtung für die Blattfeder 15 in den Freigabezustand überführt und dadurch die Betätigungseinrichtung für die Motorhaube 13 aktiviert wird.

Die in Abhängigkeit von den jeweiligen Gegebenheiten des Fahrzeugs ausgestaltete Blattfeder 15 drückt daraufhin den Scharnierabschnitt 39 nach oben, wodurch die Motorhaube 13 alleine durch die Federkraft der Blattfeder 15 angehoben wird. Dabei bewegt sich das freie Ende des Schwenkbügels 27 im Führungsschlitz 21 nach hinten, bis in der vorgegebenen Schutzstellung der Motorhaube 13 die Arretierungsausbuchtung 45 erreicht ist. Durch eine vorzugsweise gemäß der sogenannten Rechtsregel erfolgende Vorspannung des Schwenkbügels 27 wird erreicht, dass sich dieser während des Anhebens der Motorhaube 13 ständig in Kontakt mit der oberen, d.h. mit der in Schwenkrichtung vorne liegenden Begrenzungsseite des Führungsschlitzes 21 in Kontakt befindet. Alternativ oder zusätzlich kann die verschwenkbare Lagerung des Schwenkbügels 27 an der Fahrzeugkarosserie derart ausgeführt sein, dass zum Verschwenken des Bügels 27 Reibungskräfte überwunden werden müssen, die gezielt derart bemessen sind, dass der Schwenkbügel 27 nicht von selbst wieder zurückfallen und außer Kontakt mit der oberen Begrenzungsseite des Führungsschlitzes 21 gelangen kann. Hierdurch wird erreicht, dass das freie Ende des Schwenkbügels 27 sicher in die Arretierungsausbuchtung 45 gelangt und folglich eine sichere Arretierung der Motorhaube 13 in der angehobenen Schutzstellung gewährleistet ist.

Bei der in Fig. 2 dargestellten vorderen Betätigungseinrichtung ist die Motorhaube 13 mit dem Haubenschloss 25 über einen Schwenkhebel 27 verbunden, der mit einem Ende an der Motorhaube 13 und mit dem anderen Ende am Haubenschloss 25 angelenkt ist.

Das Halteorgan 17 der Betätigungseinrichtung ist an der Unterseite der Motorhaube 13 befestigt und steht im Normalbetrieb des Fahrzeugs, d.h. bei in der Ausgangsstellung befindlicher Motorhaube 13, über ein einund ausfahrbares Stellorgan 35 mit dem Fanghaken 37 des Haubenschlosses 25 in Halteeingriff, der bei geschlossener Motorhaube 13 an der Fahrzeugkarosserie 29 verriegelt ist.

Das normale Öffnen der Motorhaube 13 nach erfolgter Entriegelung des Haubenschlosses 25 wird durch die erfindungsgemäße Betätigungseinrichtung in keiner Weise beeinträchtigt.

Beim Nachweis einer erfolgten oder bevorstehenden Kollision wird das Halteorgan 17 der Betätigungseinrichtung mit einem Freigabesignal beaufschlagt, woraufhin das Stellorgan 35 eingefahren wird und somit das Halteorgan 17 außer Eingriff mit dem nach wie vor an der Fahrzeugkarosserie 29 verriegelten Fanghaken 37 gelangt. Die Motorhaube 13 kann nunmehr angehoben, d.h. vom Fanghaken 37 weg bewegt, und in die Schutzstellung überführt werden, wobei der Verlauf der Bewegung der Motorhaube 13 in die Schutzstellung durch den Schwenkhebel 27 vorgegeben ist.

Der Schwenkhebel 27 ist in die der Schutzstellung der Motorhaube 13 entsprechende aktive Stellung vorgespannt, was mittels einer Dreh-, Schrauben- oder Spiralfeder 15 erfolgt, die entweder im Bereich des Anlenkpunktes des Schwenkhebels 27 am Fanghaken 37 oder am Anlenkpunkt des Schwenkhebels 27 an der Motorhaube 13 wirksam ist.

Bevorzugt ist die Kraft der Feder 15 derart bemessen, dass als Antrieb für die Motorhaube 13 zum überwiegenden Teil die Blattfeder 15 der am hinteren Bereich der Motorhaube 13 angreifenden Betätigungseinrichtung (vgl. Fig. 1) dient und die vordere Betätigungseinrichtung (vgl. Fig. 2) lediglich unterstützend wirksam ist.

Grundsätzlich ist es erfindungsgemäß auch möglich, den im Bereich des Haubenschlosses 25 vorgesehenen vorderen Schwenkhebel 27 überhaupt nicht vorzuspannen und die Betätigungseinrichtung ausschließlich dazu einzusetzen, die Motorhaube 13 außer Eingriff mit dem Fanghaken 37 zu bringen, um die Motorhaube 13 bei verriegeltem Haubenschloss 25 in eine gewünschte Schutzstellung überführen zu können. In diesem Fall dient die am hinteren Scharnierbereich angreifende Blattfeder 15 (vgl. Fig. 1) als einziger Antrieb für die Motorhaube 13.

In jedem Fall ist durch das Lösen der Motorhaube 13 von den am Fahrzeug verriegelten Bauteilen des Haubenschlosses 25 gewährleistet, dass die Motorhaube 13 auch im vorderen Bereich des Fahrzeugs angehoben werden kann, wodurch eine maximale Puffer- oder Knautschzone geschaffen wird.

Das Freigabesignal für das an der Motorhaube 13 befestigte, im Normalbetrieb des Fahrzeugs mit dem Fanghaken 37 des Haubenschlosses 25 in Eingriff befindliche Halteorgan 17 (Fig. 2) wird von der hinteren Betätigungseinrichtung (Fig. 1) bereitgestellt.

Die Fig. 3a und 3b zeigen insbesondere die extrem flache Bauweise der erfindungsgemäß mit einer Blattfeder 15 als Antrieb für die Motorhaube 13 ausgestatteten hinteren Betätigungseinrichtung 41. Mit ihrem vorderen Endbereich ist die Blattfeder 15 an der Fahrzeugkarosserie 29 befestigt, während sie mit ihrem hinteren Ende im Bereich des Haubenscharniers 23 an der Unterseite der Motorhaube 13 angreift.

In der Ausgangsstellung der Motorhaube 13 gemäß Fig. 3a wird die Blattfeder 15 über ihr freies Ende mittels eines Halteorgans 17 in der vorgespannten Ausgangsstellung gehalten. Um die Motorhaube 13 in die Schutzstellung gemäß Fig. 3b anzuheben, wird das Halteorgan 17 mittels einer Stelleinrichtung 47 in eine Freigabestellung überführt, wodurch die Blattfeder 15 freigegeben wird.

Die Schwenkhebel 27 sorgen für eine definierte Anhebebewegung der Motorhaube 13 und legen außerdem die Lage der Motorhaube 13 relativ zum Fahrzeug in der Schutzstellung fest.

Die konkrete Ausgestaltung der Betätigungseinrichtungen, insbesondere der Blattfeder 15 und der Schwenkhebel 27, wird in Abhängigkeit von den baulichen Gegebenheiten des jeweiligen Fahrzeugs gewählt. Insbesondere bei der hinteren Betätigungseinrichtung können beispielsweise zwei in Querrichtung beabstandete, in den Seitenbereichen des Fahrzeugs unterhalb der Motorhaube 13 angeordnete Blattfedern 15 vorgesehen und der Schwenkhebel 27 bügelförmig ausgebildet werden.

### Bezugszeichenliste

- 11: Außenfläche
- 13: Bauteil, Motorhaube
- 15: Federorgan (Blattfeder bzw. Drehfeder)
- 17: Halteorgan
- 21: Kulissenführung, Führungsschlitz
- 23: Haubenscharnier
- 25: Haubenschloss
- 27: Arretierorgan, Schwenkhebel
- 29: Fahrzeugkarosserie
- 31: freies Ende der Blattfeder
- 33: Feder
- 35: Stellorgan
- 37: Fanghaken
- 39: Scharnierabschnitt
- 41: hintere Betätigungseinrichtung
- 43: vordere Betätigungseinrichtung
- 45: Arretierungsausbuchtung
- 47: Stelleinrichtung

- F: Fahrtrichtung

## Patentansprüche

1. Fußgängerschutzeinrichtung für Kraftfahrzeuge mit zumindest einem eine Außenfläche (11) des Fahrzeugs bildenden Bauteil (13), insbesondere einer Motorhaube, das im Normalbetrieb des Fahrzeugs eine Ausgangsstellung einnimmt und mittels wenigstens einer Betätigungseinrichtung ausgehend von der Ausgangsstellung in eine vom Fahrzeug abgehobene Schutzstellung überführbar ist, wobei die Betätigungseinrichtung zumindest ein das Bauteil (13) in die Schutzstellung vorspannendes Federorgan (15) und ein im Normalbetrieb das Bauteil (13) gegen die Vorspannkraft des Federorgans (15) in der Ausgangsstellung haltendes Halteorgan (17) umfasst, das zur Freigabe des vorgespannten Bauteils (13) von einem Haltezustand in einem Freigabezustand umschaltbar ist.

2. Einrichtung nach Anspruch 1,
**dadurch gekennzeichnet,**
**dass** mittels der Betätigungseinrichtung die Bewegung des Bauteils (13) von der Ausgangsstellung in die Schutzstellung entlang einer vorgegebenen Bahn geführt ist.

3. Einrichtung nach Anspruch 1 oder 2,
**dadurch gekennzeichnet,**
**dass** die Betätigungseinrichtung eine zwischen das Bauteil (13) und das Fahrzeug geschaltete Schwenkhebelanordnung umfasst.

4. Einrichtung nach einem der vorhergehenden Ansprüche,
**dadurch gekennzeichnet,**
**dass** sich das Federorgan (15) bei in der Ausgangsstellung befindlichem Bauteil (13) längs der Unterseite des Bauteils (13) im Wesentlichen parallel zur Außenfläche (11) des Bauteils (13) erstreckt.

5. Einrichtung nach einem der vorhergehenden Ansprüche,
**dadurch gekennzeichnet,**
**dass** das Federorgan (15) in Form einer Blattfeder vorgesehen ist.

6. Einrichtung nach einem der vorhergehenden Ansprüche,
**dadurch gekennzeichnet,**
**dass** das Bauteil (13) mittels eines Arretierorgans (27) der Betätigungseinrichtung in der Schutzstellung automatisch arretierbar ist, wobei vorzugsweise das Arretierorgan (27) als Schwenkhebel ausgebildet ist.

7. Einrichtung nach einem der vorhergehenden Ansprüche,
**dadurch gekennzeichnet,**
**dass** das Arretierorgan (27) nachgiebig ausgebildet und insbesondere durch einen vorgegebenen Wert übersteigende, auf das in der Schutzstellung befindliche Bauteil (13) einwirkende äußere Kräfte verformbar und/oder lageveränderbar ist.

8. Einrichtung nach einem der vorhergehenden Ansprüche,
**dadurch gekennzeichnet,**
**dass** das mit einem Ende fahrzeugfest verankerte Federorgan (15) mit seinem anderen Ende am Bauteil (13) befestigt und im Befestigungsbereich eine insbesondere von einem Führungsschlitz (21) gebildete Kulissenführung für ein freies Ende eines mit seinem anderen Ende fahrzeugfest angelenkten Schwenkhebels (19) vorgesehen ist, wobei bevorzugt in jeder Schwenkstellung der Schwenkhebel (19) durch eine Vorspannung und/oder durch Lagerreibung in Kontakt mit der bezogen auf die Schwenkbewegung in die Schutzstellung vorne liegenden Begrenzung der Kulissenführung (21) gehalten ist.

9. Einrichtung nach einem der vorhergehenden Ansprüche,
**dadurch gekennzeichnet,**
**dass** wenigstens zwei an räumlich voneinander getrennten Bereichen mit dem Bauteil (13) zusammenwirkende Betätigungseinrichtungen vorgesehen sind.

10. Einrichtung nach Anspruch 9,
**dadurch gekennzeichnet,**
**dass** eine Haupt-Betätigungseinrichtung und eine die Haupt-Betätigungseinrichtung unterstützende Neben-Betätigungseinrichtung vorgesehen sind, wobei bevorzugt ein Freigabesignal für die Neben-Betätigungseinrichtung von der Haupt-Betätigungseinrichtung bereitstellbar oder das Halteorgan (17) der Neben-Betätigungseinrichtung mittels der Haupt-Betätigungseinrichtung betätigbar ist.

11. Einrichtung nach Anspruch 9,
**dadurch gekennzeichnet,**
**dass** zumindest eine der Betätigungseinrichtungen zum Lösen des Bauteils (13) von der Fahrzeugkarosserie (29) ausgebildet ist, insbesondere zum Lösen einer Verriegelung zwischen dem Bauteil (13) und der Fahrzeugkarosserie (29), bevorzugt einem Haubenschloss (25) oder einem Bestandteil (37) des Haubenschlosses (25).

12. Einrichtung nach einem der vorhergehenden Ansprüche,
**dadurch gekennzeichnet,**
**dass** das Bauteil (13) eine Motorhaube ist, mit der zumindest eine Betätigungseinrichtung im Bereich eines hinteren Haubenscharniers (23) und wenigstens eine weitere Betätigungseinrichtung im Bereich eines vorderen Haubenschlosses (25) jeweils zum Anheben der Motorhaube (13) zusammenwirken.

13. Einrichtung nach Anspruch 12,
**dadurch gekennzeichnet,**
**dass** das als Blattfeder ausgebildete Federorgan (15) im Bereich seines einen freien Endes mit dem Haubenscharnier (23) verbunden ist.

14. Einrichtung nach Anspruch 12 oder 13,
**dadurch gekennzeichnet,**
**dass** die Motorhaube (13) über die Betätigungseinrichtung mit dem Haubenschloss (25) derart verbunden ist, dass die Motorhaube (13) mittels der Betätigungseinrichtung bei verriegeltem Haubenschloss (25) anhebbar ist.

15. Einrichtung nach Anspruch 12 bis 14,
**dadurch gekennzeichnet,**
**dass** die Betätigungseinrichtung einen mittels des Federorgans (15) vorgespannten Schwenkhebel (27) umfasst, der mit einem Ende an das Haubenschloss (25) und mit einem weiteren Ende an die Motorhaube (13) angelenkt ist.

16. Einrichtung nach einem der Ansprüche 12 bis 15,
**dadurch gekennzeichnet,**
**dass** das Halteorgan (17) an der Motorhaube (13) angebracht und bei in der Ausgangsstellung befindlicher Motorhaube (13) in Halteeingriff mit dem Haubenschloss (25) bringbar ist.

17. Kraftfahrzeug mit wenigstens einer Fußgängerschutzeinrichtung nach einem der vorhergehenden Ansprüche.
